(19) Europäisches Patentamt European Patent Office Office européen des brevets

(11) **EP 4 535 261 A1**

(12) **EUROPEAN PATENT APPLICATION**

(43) Date of publication:
09.04.2025 Bulletin 2025/15

(21) Application number: 23306708.1

(22) Date of filing: 05.10.2023

(51) International Patent Classification (IPC):
G06Q 20/02 (2012.01)    G06Q 20/40 (2012.01)
G06Q 40/00 (2023.01)    G06Q 40/02 (2023.01)
G06Q 40/03 (2023.01)    G06Q 40/04 (2012.01)

(52) Cooperative Patent Classification (CPC):
G06Q 20/023; G06Q 20/403; G06Q 40/00;
G06Q 40/02; G06Q 40/03; G06Q 40/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Vocalink International Limited
London
EC4R 3AB (GB)

(72) Inventors:
• JOHN, Prasanth Kuruvilla
 Enfield (GB)
• GUTIERREZ, German Blanco
 78100 Saint Germain-en-Laye (FR)
• WRIGHT, Stephen Richard
 Uxbridge (GB)
• RAJASEKARAN, Vimal Kumar
 Amersham (GB)

(74) Representative: Keltie LLP
No. 1 London Bridge
London SE1 9BA (GB)

(54) **AUTOMATED LIQUIDITY MANAGEMENT IN REAL TIME PAYMENT**

(57) A computer-implemented real-time payment system for clearing and settlement of transactions is described. The real-time payment system is adapted to implement a method of automated liquidity maintenance - it has network connections to a central bank and to a plurality of participants. The real-time payment system receives transactions for clearing and settlement from the plurality of participants, each of which has a liquidity position in the real-time payment system. At least some of the participants have a funded liquidity position in the central bank. The real-time payment system comprises a liquidity manager for determining whether the liquidity position of each of the participants meets predetermined rules, wherein if the liquidity position of any of the participants does not meet a predetermined rule applicable when the determination is made, the liquidity manager requests an adjustment for that liquidity position so that it complies with that predetermined rule. The real-time payment system also comprises a liquidity instructor to co-ordinate with the central bank to use one of the funded liquidity positions to support that adjustment to a liquidity position.

Figure 2

**Description**

TECHNICAL FIELD

The present disclosure relates to liquidity management in real time payment.

BACKGROUND

Payments may be established between parties in a number of ways - credit and debit card payment transactions, account to account payments - but to complete the payment process, the payment needs to be cleared between the participating banks (or other participants) representing both parties (for example, the issuing bank for a consumer account and the acquirer bank for a merchant account) and settled so that funds pass to the correct places to complete the transaction. Clearing comprises the processes necessary to allow settlement to occur, and settlement involves the actual exchange of funds so that these reflect the completion of the transaction.

With the adoption of credit and debit cards, e-commerce and internet banking, transactions resulting in payments have been made between parties at real time and outside of conventional office hours, while clearing and settlement had originally been performed significantly more slowly. The development of automated clearing house systems - starting with the Automatic Clearinghouse System in California and BACS in the UK in the 1960s - has allowed clearing and settlement processes to take place more rapidly, eventually reaching real-time. Instant Payment Service is a real-time payment infrastructure provided by the applicant - it is able to provide clearing and settlement in real time for transactions mediated through sending and receiving banks, for example for transfers of funds between account holders for the sending and receiving banks respectively.

Clearing and settlement processes are typically mediated by a central bank of a relevant country (or other geography). This generally requires there to be a relationship between the central bank and the participant in the clearing and settlement processes - this means that the participant will typically be a bank or a similar financial institution. It would be desirable to extend access to clearing and settlement processes to other kinds of institution. This is problematic, as the lack of a relationship between an institution and a central bank makes it challenging to ensure that there is sufficient liquidity in the system to guarantee that all transactions are funded - while this is challenging for any such process, it is particularly challenging for real-time payment systems. While sufficient liquidity can always be provided in principle by committing a sufficiently large volume of funds to the purpose, this may simply not be an economically viable solution for many participants.

The present disclosure has been devised to mitigate or overcome at least some of the above-mentioned problems with existing approaches to provide an improved approach to clearing and settlement.

SUMMARY OF THE DISCLOSURE

According to a first aspect of the present disclosure there is provided a computer-implemented real-time payment system comprising a programmed computer system adapted for clearing and settlement of transactions, wherein: the real-time payment system has one or more network connections to a central bank and to a plurality of participants, wherein each participant is a financial institution or another institution participating directly in the payment process, and wherein the real-time payment system receives transactions for clearing and settlement from the plurality of participants; each of the participants has a liquidity position in the real-time payment system and at least some of the participants have a funded liquidity position in the central bank; the real-time payment system comprises a liquidity manager for determining whether the liquidity position of each of the participants meets predetermined rules, wherein if the liquidity position of any of the participants does not meet a predetermined rule applicable when the determination is made, the liquidity manager requests an adjustment for that liquidity position so that it complies with that predetermined rule; and the real-time payment system comprises a liquidity instructor to co-ordinate with the central bank to use one of the funded liquidity positions to support that adjustment to a liquidity position.

Using this approach, liquidity for the real-time payment system can be managed automatically in an effective manner and without the need for commitment of excessive large funds to ensure liquidity.

In embodiments, the plurality of participants comprise funding participants and funded participants, with each of the funding participants having a funded liquidity position at the central bank, and with each of the funded participants having no funded liquidity position at the central bank but associated by a funding arrangement with one of the funding participants. Using this approach, access to the real-time payment system is also increased, as participants with a relationship with an appropriate financial institution can use the system even if they do not themselves have a liquidity pool at a central bank.

In such an arrangement, the real-time payment system may further comprise a liquidity consolidator adapted to consolidate requested adjustments to the liquidity positions for each funding participant and its associated funded participants and adapted to request the liquidity manager to co-ordinate the funded liquidity position of that funding participant with the consolidated adjustments for that funding participant and its associated funded participants. Such a real-time payment system may be adapted to determine whether a requested adjustment to a liquidity position for a funded participant is allowed under the funding arrangement with the funding participant for that funded participant.

In embodiments, the liquidity manager may be adapted to determine whether the liquidity position of each of the participants meets predetermined rules at a plurality of specified times, wherein each of the specified times has an associated set of predetermined rules.

In embodiments, the liquidity manager may be adapted during an operating period to determine whether the liquidity position of each of the participants falls below a predetermined floor level, wherein the liquidity manager is adapted to request an adjustment for that liquidity position directly.

In embodiments, the real-time payment system may be adapted to adjust a liquidity position automatically if a required adjustment is to draw down funds, but only to adjust a liquidity position after co-ordination with the central bank if a top-up to a liquidity position is required.

According to a second aspect of the present disclosure there is provided a computer-implemented method of automated liquidity maintenance for a real-time payment system adapted for clearing and settlement of transactions, wherein the real-time payment system is connected to a central bank and has a plurality of participants, wherein the real-time payment system receives transactions for clearing and settlement from the plurality of participants, wherein each of the participants has a liquidity position in the real-time payment system and wherein at least some of the participants have a funded liquidity position in the central bank, the method comprising: determining whether the liquidity position of each of the participants meets predetermined rules applicable to a time when the determination is made; if the liquidity position of any of the participants does not meet a predetermined rule applicable when the determination is made, requesting an adjustment for that liquidity position so that it complies with that predetermined rule; and co-ordinating with the central bank to use one of the funded liquidity positions to support that adjustment to a liquidity position.

The plurality of participants may comprise funding participants and funded participants, with each of the funding participants having a funded liquidity position at the central bank, and with each of the funded participants having no funded liquidity position at the central bank but associated by a funding arrangement with one of the funding participants. The method may further comprise consolidating requested adjustments to the liquidity positions for each funding participant and its associated funded participants, wherein co-ordinating with the central bank may further comprise co-ordinating the funded liquidity position of that funding participant with the consolidated adjustments for that funding participant and its associated funded participants. This may further comprise determining whether a requested adjustment to a liquidity position for a funded participant is allowed under the funding arrangement with the funding participant for that funded participant.

In embodiments, the method may further comprise determining whether the liquidity position of each of the participants meets predetermined rules at a plurality of specified times, wherein each of the specified times has an associated set of predetermined rules.

In embodiments, the method may further comprise during an operating period determining whether the liquidity position of each of the participants falls below a predetermined floor level, and requesting an adjustment for that liquidity position directly.

In embodiments, the method may further comprise adjusting a liquidity position automatically if a required adjustment is to draw down funds, but only adjusting a liquidity position after co-ordination with the central bank if a top-up to a liquidity position is required.

According to a third aspect of the present disclosure there is provided a medium having stored thereon a computer program adapted to program a suitable computer system to perform the method of the second aspect.

BRIEF DESCRIPTION OF THE DRAWINGS

One or more embodiments of the disclosure will now be described, by way of example only, with reference to the accompanying drawings, in which:

Figure 1 shows a payment ecosystem including a real time payment system and a central bank along with other parties acting and interacting in the payment ecosystem;

Figure 2 shows a real-time payment system suitable for operation according to an embodiments of the disclosure;

Figure 3 shows functional elements of a real-time payment system according to an embodiment of the disclosure.

Figure 4 shows an overnight consolidated top-up process in the real-time payment system of Figure 3;

Figure 5 shows an overnight consolidated draw-down process in the real-time payment system of Figure 3;

Figure 6 shows an overnight liquidity adjustment process in the real-time payment system of Figure 3;

Figure 7 shows a start-of-day/start-of-month liquidity adjustment process in the real-time payment system of Figure 3; and

Figure 8 shows an intraday liquidity adjustment process in the real-time payment system of Figure 3.

DETAILED DESCRIPTION

General and specific embodiments of the disclosure will be described below with reference to the Figures.

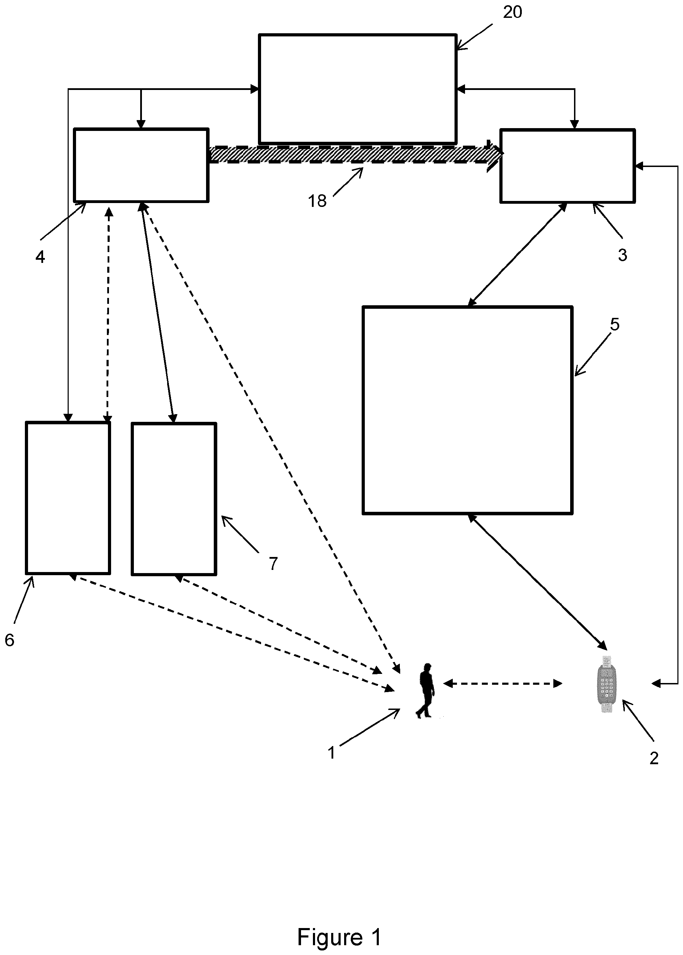

Figure 1 shows a financial ecosystem including a clearing system along with other participants in the financial system. Here the system is represented as performing a transaction between a consumer 1 and a merchant 2 - however, this is merely representative of one type of transaction, and the overall approach here can apply to any type of transaction. It is applicable to payments mediated through a payment network 5 or to, for example, account-to-account payments that are not mediated through a payment network 5 (authorisation of payments is outside the scope of this specification, which relates only to clearance and settlement - such authorisation may be conventional).

In this case, the recipient is shown as being a merchant 2 represented by an acquiring/payee bank 3 and the payor a consumer 1 represented directly or indirectly by an issuing/payor bank 4 able to participate in clearing or by an alternative financial institution 6. In a normal clearing arrangement, both payor banks 4 and payee banks 3 provide details of payments to be made into a clearing system 20. Clearing will typically involve a central bank, and may be carried out by structures such as automatic clearing houses. The end result is a consequent flow 18 of funds from the payor bank 4 to the payee bank 3 on settlement to reflect the payment.

Here alternatives for representation of the consumer (and hence the payor - though this is equally applicable to the payee) are shown. The consumer may have an account directly with the payor/issuing bank 4, and all aspects of the transaction may proceed through this relationship. The consumer 1 may be represented by a different type of entity 7 that is not able to participate in clearing, and may therefore to act through a payor bank 4 in order for the transaction to be cleared. However, another possible situation - which is not conventional - is that the consumer is represented by an entity 6 that can interact with the clearing system 20, but which is not a payor bank 4 - in this arrangement, the participating entity 6 is shown as having a relationship with a payor bank 4. It should be noted that the presence of a consumer 1 is not necessary for the involvement of either indirectly participating entity 7 or directly participating entity 6 - this is merely illustrative, and these entities may be representing other types of participant in the system, or may simply be representing themselves.

As previously described, real-time payment systems enable payments to be not only made but also cleared in real time. Instant Payment Service of the applicant is such a real-time payment infrastructure- it is able to provide clearing and settlement in real time for transactions mediated through sending and receiving banks, for example for transfers of funds between account holders for the sending and receiving banks respectively.

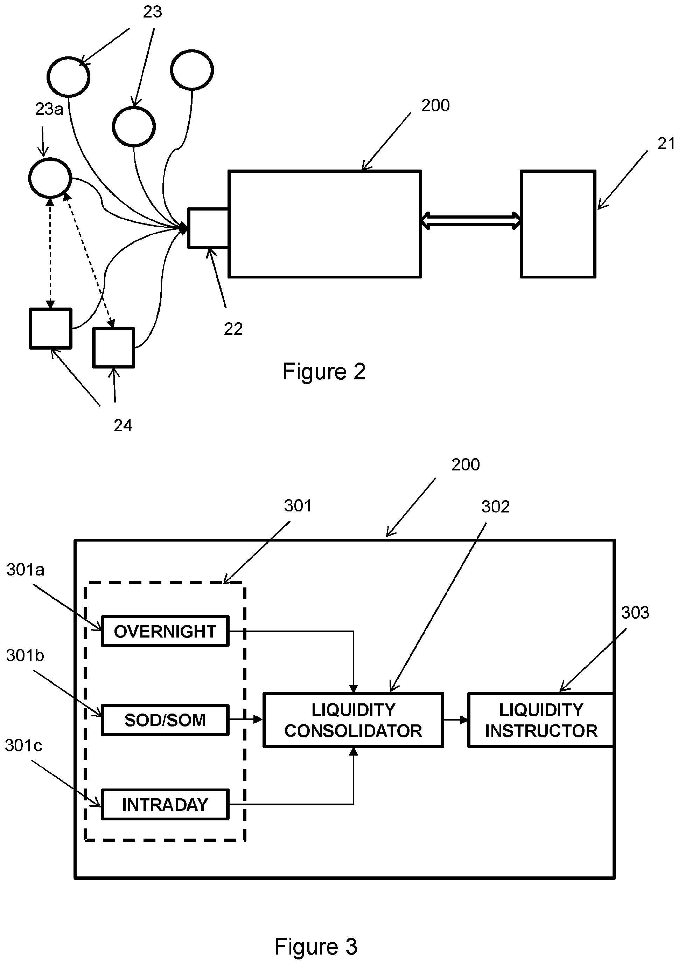

Figure 2 shows an architecture using a real-time payment service 200 for clearing of transactions - the real-time payment service 200 here is in communication with a central bank 21 for guaranteeing the system. Participating banks 23 provide transactions for clearing to, and receive outputs from, the real-time payment service 200 through a real-time payment service gateway 22. This much is conventional - however, in this architecture there are also institutions 24 which are not conventional participating banks - typically, this will be because these institutions do not have direct relationships with the central bank 21 and do not, for example, hold a liquidity pool at the central bank which will enable the central bank 21 to act as guarantor. Here, the illustrated institutions 24 are shown to have a relationship with one of the participating banks 23a. The significance of this relationship will be discussed in further detail below.

Figure 3 shows key elements of the real-time payment service 200 of Figure 2 according to an embodiment of the disclosure. In such an embodiment, the real-time payment service is adapted for automatic adjustment of liquidity in respect of all participants, including both participating banks and parties that do not have a direct relationship with the central bank, but instead work through another participant that does. The terms used below are Funding Participants (who have a direct relationship with a central bank, and maintain a liquidity pool there) and Funded Participants (who do not have this direct relationship, but instead have a direct relationship with a Funding Participant and utilise their liquidity pool with the central bank).

In Figure 3, the real-time payment service 200 comprises a liquidity manager 301, which determines the liquidity positions for each participant and which also comprises a plurality of rule sets 301a, 301b, 301c to provide liquidity management instructions for different situations: here these rule sets are Overnight 301a, Start of Day/Start of Month 301b and Intraday 301c, though alternative rule sets can be provided in other embodiments. The liquidity manager 301 interacts with a liquidity consolidator 302, which serves to consolidate the position for each Funding Participant across that Funding Participant and its associated Funded Participants. The liquidity consolidator 302 interacts with a liquidity instructor 303, which communicates with the central bank 21 to correct the liquidity positions in the real-time payment service 200 as needed by use of the liquidity pool for each Funding Participant held in the central bank 21. These elements of the real-time payment service 200 may be implemented by a suitably programmed computer system with networked connections to the central bank 21 and to participants and payment systems for processing of transactions.

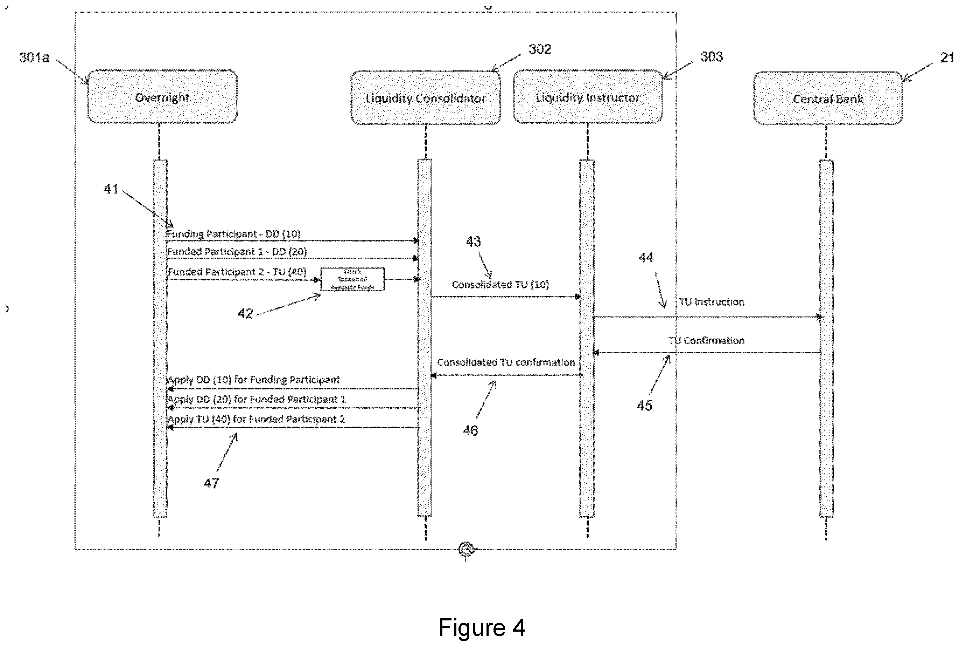

Examples of automated liquidity adjustment using the real-time payment service 200 of Figure 3 will now be described below with reference to Figures 4 to 8. The general principle employed is that top-up (to replenish liquidity for a Participant in the real-time payment system) and draw-down (to remove excess liquidity for a Participant in the real-time payment system) instructions are made to the central bank, ensuring that each Participant has enough liquidity at any point in time for transactions to be processed. The liquidity consolidator 302 enables these instructions to be consolidated for each Funding Participant into a single consolidated instruction, so the central bank need not establish any relationship with Funded Participants, but can simply maintain relationships with Funding Participants as it conventionally does for participating banks. The general principle is that both Funding Participants and Funded Participants should be funded within the real-time payment system according to predetermined rules, which can require particular balances or balance ranges under particular situations. For a Funded Participant, this range is determined at least in part by the arrangements made between the Funded Participant and the associated Funding Participant - the Funded Participant will only have funds available consistent with this agreement (and consequently the level of support provided by the Funding Participant). If the Funded Participant reaches this funding limit, or if there are insufficient funds available for a top-up, both the Funding Participant and the Funded Participant will be advised by the real-time payment system that a funding adjustment is required.

A process for the real-time payment system to bring each Funding and Funded Participant to a predetermined balance for Overnight - here termed an Overnight Target Prefunded Balance - according to predetermined rules for the Participants in connection with the Overnight module. The required balance may be different for different Participants, and can be affected by various factors (relationships with other Participants, activity levels, relationship with the central bank) even if the same rules are applied to each Participant - however, these issues are essentially administrative and will not be discussed further here.

The Overnight module calculates the required position for each Participant according to the Overnight rule set. The position is consolidated for each Funding Participant by considering both the Funding Participant and all associated Funded Participants according to the following rules:

1. If both Funding Participant and Funded Participant(s) require a top-up (TU) liquidity adjustment, a single consolidated TU instruction is sent to the central bank.
2. If both Funding Participant and Funded Participant(s) require a draw-down (DD) liquidity adjustment, a single consolidated DD instruction is sent to the central bank.
3. If some combination of TU and DD instructions are required for the Funding Participant and Funded Participant(s), then there are three possible outcomes as shown in Figures 4 to 6, relating to the three different types of result in the following formula:

$$Result = \sum_{i=1}^{n} TU - \sum_{i=1}^{n} DD$$

Figure 4 and Table 1 illustrate an example of the first type of result, in which there is a net positive result and a consolidated top-up is required. Here Funding Participant is associated with Funded Participant 1 and Funded Participant 2, and Table 1 illustrates the requirements for each Participant.

Table 1 - Overnight with Consolidated Top-Up

| Participant | Instruction Type | Amount |
|---|---|---|
| Funding Participant | DD | 10 |
| Funded Participant 1 | DD | 20 |
| Funded Participant 2 | TU | 40 |
| **Result** | 10 | |
| **Instruction to Central Bank - TU** | 10 | |

Here the Overnight rule set establishes that a net top-up is required because the requirements of Funded Participant 2 outweigh the draw-downs for Funding Participant and Funded Participant 1. The overall flow is shown in Figure 4. The Overnight module conveys 41 all the Participant requirements to the liquidity consolidator, after first determining 42 that the top-up for Funded Participant 2 can take place without exceeding the funds available for that Participant (here designated Sponsored Available Funds). A consolidated top-up request is provided 43 from the liquidity consolidator to the liquidity instructor, which then provides a top-up instruction 44 to the central bank. The central bank adjusts liquidity pools accordingly and provides a top-up confirmation 45 to the liquidity instructor, which provides 46 a consolidated top-up confirmation to the liquidity consolidator. The liquidity consolidator can then apply 47 the liquidity adjustments for Funding Participant, Funded Participant 1 and Funded Participant 2 in the real-time payment system by instruction to the Overnight module.

Some variations to this approach may be used. For example, a draw-down may be confirmed in the real-time payment system directly (as this will not be conditional on liquidity in the central bank), but there may be reasons why a draw-down could not be completed within the real-time payment system itself. This is in contrast to a top-up, where it is necessary to have central bank confirmation that funds are available to the real-time payment system. If draw-down requests are not sent until after they have been confirmed in the real-time payment system, there is no danger of the positions in the real-time payment system and the central bank falling out of synchronisation. However, where there is consolidation of top-up and draw-down requests leading to a net top-up request, the operations do not complete in the real-time payment system until the top-up confirmation is received.

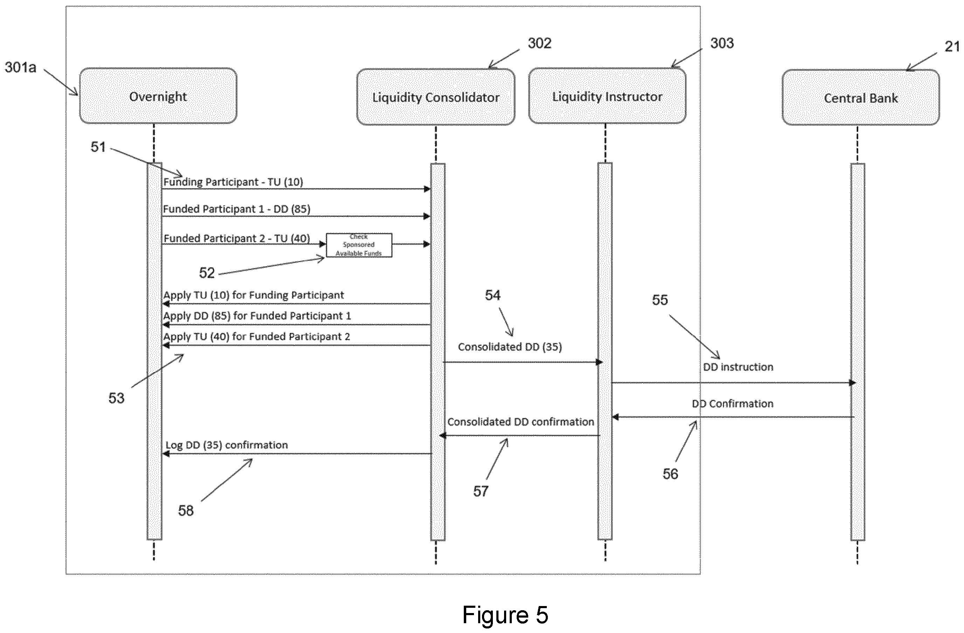

An example of the second type of result is shown in Table 2 with reference to Figure 5.

Table 2 - Overnight with Consolidated Draw-down

| Participant | Instruction Type | Amount |
| --- | --- | --- |
| Funding Participant | TU | 10 |
| Funded Participant 1 | DD | 85 |
| Funded Participant 2 | TU | 40 |
| **Result** | | -35 |
| **Instruction to Central Bank - DD** | | 35 |

Here, although both Funding Participant and Funded Participant 2 require a top-up, Funded Participant 1 requires a larger draw-down, so the consolidated instruction is a draw-down. The flow is as shown in Figure 5, and is broadly similar to that of Figure 4. The Overnight module conveys 51 all the Participant requirements to the liquidity consolidator, after again first determining 52 that the top-up for Funded Participant 2 can take place without exceeding the Sponsored Available Funds available for that Participant. As a consolidated draw-down is required, there is no need to wait for confirmation from the central bank that the liquidity adjustment can be made, so this is done 53 directly. A consolidated draw-down request is provided 54 from the liquidity consolidator to the liquidity instructor, which then provides a draw-down instruction 55 to the central bank. The central bank adjusts liquidity pools accordingly and provides a draw-down confirmation 56 to the liquidity instructor, which provides 57 a consolidated draw-down confirmation to the liquidity consolidator. The liquidity consolidator can then simply provide 58 a confirmation to the Overnight module.

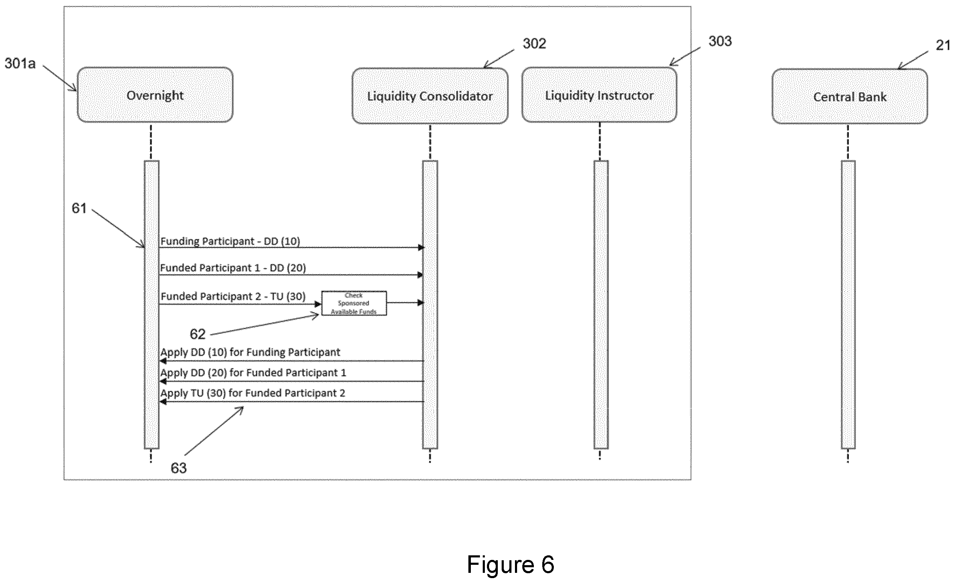

The third type of result is illustrated in Table 3 with reference to Figure 6. As can be seen in the example shown in Table 3, in this case the requirements of the Funding Participant and its Funded Participants balance precisely.

Table 3 - Overnight with no net adjustment

| Participant | Instruction Type | Amount |
| --- | --- | --- |
| Funding Participant | DD | 10 |
| Funded Participant 1 | DD | 20 |
| Funded Participant 2 | TU | 30 |
| **Result** | | 0 |
| **No Instruction to Central Bank** | | |

This is the most straightforward case, as can be seen from Figure 6. The Overnight module conveys 61 all the Participant requirements to the liquidity consolidator, after again determining 62 that the top-up for Funded Participant 2 can take place without exceeding the funds available for that Participant (here designated Sponsored Available Funds). Here, the liquidity consolidator determines that no interaction with the central bank is required as the requirements balance. The liquidity consolidator can then simply apply 63 the liquidity adjustments for Funding Participant, Funded Participant 1 and Funded Participant 2 in the real-time payment system by instruction to the Overnight module.

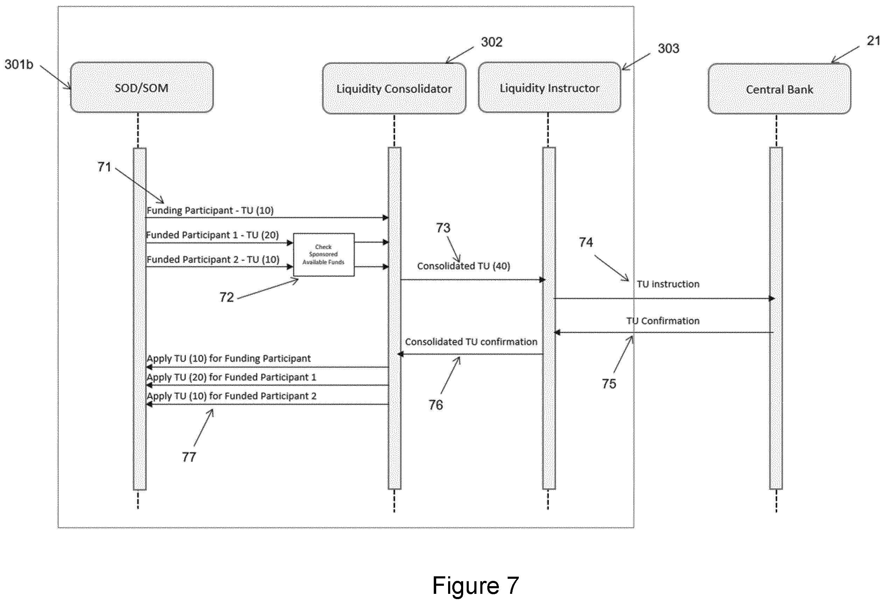

A different situation, using a different module, is illustrated in Figure 7, with an example shown in Table 4. This is the Start-of-day/Start-of-month module - as opposed to Overnight (where typically there is less demand on the system and lower levels of liquidity can be supported), at the start of the working day liquidity levels need to be effective to support a high level of flow of funds, and at the start of the working month this level may need to be still higher. As shown in Table 4, what results is a general requirement to top-up each Participant to at least a minimum level - the Target Prefunded Balance. For a Funding Participant and its Funded Participants, this consolidates to the following result:

$$Result = \sum_{i=1}^{n} TU$$

Table 4 - Start-of-Day/Start-of-Month

| Participant | Instruction Type | Amount |
|---|---|---|
| Funding Participant | TU | 10 |
| Funded Participant 1 | TU | 20 |
| Funded Participant 2 | TU | 10 |
| **Result** | | 40 |
| **Instruction to Central Bank - TU** | | 40 |

As can be seen from Figure 7, the flow is very similar to the consolidated top-up flow of Figure 4. The SoD/SoM module conveys 71 all the Participant requirements to the liquidity consolidator, after first determining 72 that the top-up for all Funded Participants (as all require a top-up) can be met from Sponsored Available Funds. A consolidated top-up request is provided 73 from the liquidity consolidator to the liquidity instructor, which then provides a top-up instruction 74 to the central bank. The central bank adjusts liquidity pools accordingly and provides a top-up confirmation 75 to the liquidity instructor, which provides 76 a consolidated top-up confirmation to the liquidity consolidator. The liquidity consolidator can then apply 77 the liquidity adjustments for Funding Participant, Funded Participant 1 and Funded Participant 2 in the real-time payment system by instruction to the SoD/SoM module.

A third type of operation is provided by the Intraday module. The operation of the SoD/SoM module will mean that in general, the real-time payment system will operate during the working day without need for liquidity adjustment interaction with the central bank. However, in some situations, the net flow of transactions will be such as to take one or other of the participants below a "floor" level of liquidity in the real-time payments system, in which case a spot adjustment is required. These adjustments are made by participant without consolidation.

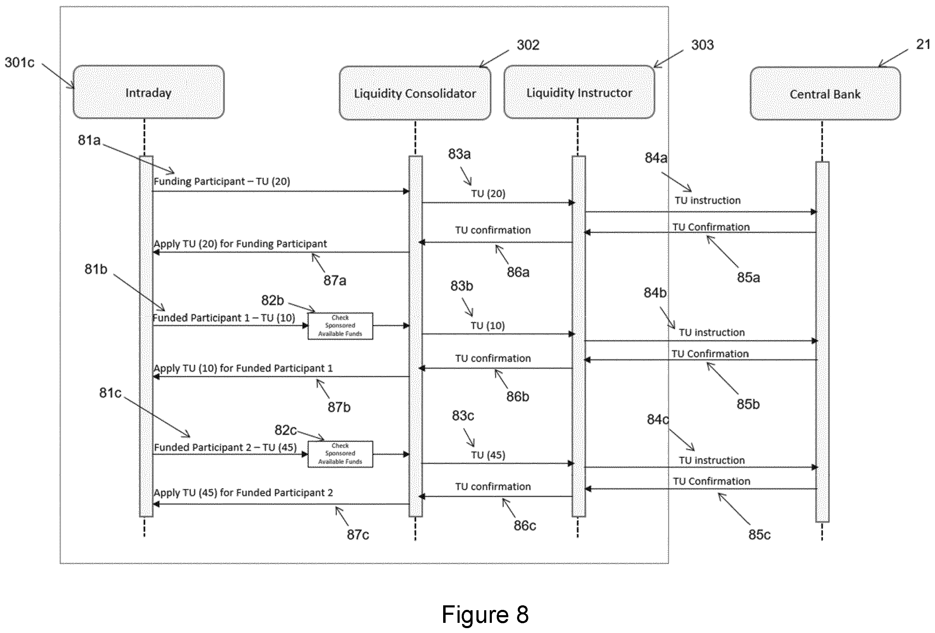

This is shown in Figure 8, which illustrates three separate top-up events during the day determined by the Intraday module - a first top-up 81a of 20 for the Funding Participant, a second top-up 81b of 10 for Funding Participant 1, and a third top-up 81c of 45 for Funding Participant 2. These all have a broadly similar pattern - the top-up requirements are all provided 81a, 81b, 81c to the liquidity consolidator, after first determining 82b, 82c that the top-up for any Funded Participant can be met from Sponsored Available Funds. The interactions between liquidity consolidator, liquidity instructor and central bank are then the same in each case, as each case involves (from the perspective of the central bank) a top-up for the Funding Participant. A top-up request for the Funding Participant is provided 83a, 83b, 83c from the liquidity consolidator to the liquidity instructor, which then provides a top-up instruction 84a, 84b, 84c to the central bank. The central bank adjusts liquidity pools accordingly and provides a top-up confirmation 85a, 85b, 85c to the liquidity instructor, which provides 86a, 86b, 86c a top-up confirmation to the liquidity consolidator. The liquidity consolidator determines which participant requires the top-up, and applies 87a, 87b, 87c the top-up by instruction to the Intraday module.

It should be noted that the types of operation shown above are exemplary, rather than required, and other possibilities are available, both for adjustments at specific times (as for Overnight and SoD/SoM) or for adjustment rules operating over specific time periods (as for Intraday).

Further modifications may be made to the above examples without departing from the scope of the present disclosure as defined in the accompanying claims.

**Claims**

1. A computer-implemented real-time payment system comprising a programmed computer system adapted for clearing and settlement of transactions, wherein:

the real-time payment system has one or more network connections to a central bank and to a plurality of participants, wherein each participant is a financial institution or another institution participating directly in the payment process, and wherein the real-time payment system receives transactions for clearing and settlement from the plurality of participants;

each of the participants has a liquidity position in the real-time payment system and at least some of the participants have a funded liquidity position in the central bank;

the real-time payment system comprises a liquidity manager for determining whether the liquidity position of each of the participants meets predetermined rules, wherein if the liquidity position of any of the participants does not meet a predetermined rule applicable when the determination is made, the liquidity manager requests an adjustment for that liquidity position so that it complies with that predetermined rule; and

the real-time payment system comprises a liquidity instructor to co-ordinate with the central bank to use one of the funded liquidity positions to support that adjustment to a liquidity position.

2. The real-time payment system of claim 1, wherein the plurality of participants comprise funding participants and funded participants, wherein each of the funding participants has a funded liquidity position at the central bank, and wherein each of the funded participants has no funded liquidity position at the central bank but is associated by a funding arrangement with one of the funding participants.

3. The real-time payment system of claim 2, wherein the real-time payment system further comprises a liquidity consolidator, wherein the liquidity consolidator is adapted to consolidate requested adjustments to the liquidity positions for each funding participant and its associated funded participants, and to request the liquidity manager to co-ordinate the funded liquidity position of that funding participant with the consolidated adjustments for that funding participant and its associated funded participants.

4. The real-time payment system of claim 3, wherein the real-time payment system is adapted to determine whether a requested adjustment to a liquidity position for a funded participant is allowed under the funding arrangement with the funding participant for that funded participant.

5. The real-time payment system of any preceding claim, wherein the liquidity manager is adapted to determine whether the liquidity position of each of the participants meets predetermined rules at a plurality of specified times, and wherein each of the specified times has an associated set of predetermined rules.

6. The real-time payment system of any preceding claim, wherein the liquidity manager is adapted during an operating period to determine whether the liquidity position of each of the participants falls below a predetermined floor level, and wherein the liquidity manager is adapted to request an adjustment for that liquidity position directly.

7. The real-time payment system of any preceding claim, wherein the real-time payment system is adapted to adjust a liquidity position automatically if a required adjustment is to draw down funds, but only to adjust a liquidity position after co-ordination with the central bank if a top-up to a liquidity position is required.

8. A computer-implemented method of automated liquidity maintenance for a real-time payment system adapted for clearing and settlement of transactions, wherein the real-time payment system is connected to a central bank and has a plurality of participants, wherein the real-time payment system receives transactions for clearing and settlement from the plurality of participants, wherein each of the participants has a liquidity position in the real-time payment system and wherein at least some of the participants have a funded liquidity position in the central bank, the method comprising:

determining whether the liquidity position of each of the participants meets predetermined rules applicable to a time when the determination is made;

if the liquidity position of any of the participants does not meet a predetermined rule applicable when the determination is made, requesting an adjustment for that liquidity position so that it complies with that predetermined rule; and

co-ordinating with the central bank to use one of the funded liquidity positions to support that adjustment to a liquidity position.

9. The method of claim 8, wherein the plurality of participants comprise funding participants and funded participants, wherein each of the funding participants has a funded liquidity position at the central bank, and wherein each of the funded participants has no funded liquidity position at the central bank but is associated by a funding arrangement with one of the funding participants.

10. The method of claim 9, further comprising consolidating requested adjustments to the liquidity positions for each funding participant and its associated funded participants, wherein co-ordinating with the central bank further comprises co-ordinating the funded liquidity position of that funding participant with the consolidated adjustments for that funding participant and its associated funded participants.

11. The method of claim 10, further comprising determining whether a requested adjustment to a liquidity position for a funded participant is allowed under the funding arrangement with the funding participant for that funded participant.

12. The method of any of claims 8 to 11, further comprising determining whether the liquidity position of each of the participants meets predetermined rules at a plurality of specified times, wherein each of the specified times has an associated set of predetermined rules.

13. The method of any of claims 8 to 12, further comprising during an operating period determining whether the liquidity position of each of the participants falls below a predetermined floor level, and requesting an adjustment for that liquidity position directly.

14. The method of any of claims 8 to 13, further comprising adjusting a liquidity position automatically if a required adjustment is to draw down funds, but only adjusting a liquidity position after co-ordination with the central bank if a top-up to a liquidity position is required.

15. A medium having stored thereon a computer program adapted to program a suitable computer system to perform the method of any of claims 8 to 14.

Figure 1

23

23a

200

21

22

Figure 2

24

200

301

302

301a

303

OVERNIGHT

301b

SOD/SOM

LIQUIDITY
CONSOLIDATOR

LIQUIDITY
INSTRUCTOR

301c

INTRADAY

Figure 3

EP 4 535 261 A1

Figure 4

Figure 5

Figure 6

Figure 7

Figure 8

Europäisches
Patentamt

European
Patent Office

Office européen
des brevets

# EUROPEAN SEARCH REPORT

Application Number

**EP 23 30 6708**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/073750 A1 (LEDFORD STEPHEN [US] ET AL) 11 March 2021 (2021-03-11) * paragraphs [0015] - [0020], [0250], [0333] - [0335] * | 1-15 | INV. G06Q20/02 G06Q20/40 G06Q40/00 G06Q40/02 G06Q40/03 G06Q40/04 |
| X | US 2015/339765 A1 (DUBEY VINAY [US] ET AL) 26 November 2015 (2015-11-26) * the whole document * | 1-15 | |
| X | US 2007/288347 A1 (LEJDSTROM BENGT [SE] ET AL) 13 December 2007 (2007-12-13) * paragraphs [0007], [0027], [0031], [0039] * | 1-15 | |

TECHNICAL FIELDS
SEARCHED (IPC)

G06Q

The present search report has been drawn up for all claims

| Place of search | Date of completion of the search | Examiner |
|---|---|---|
| The Hague | 26 January 2024 | Wolles, Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 30 6708**

This annex lists the patent family members relating to the patent documents cited in  the above-mentioned European search report.
The members are as contained in the European Patent Office EDP file on
The European Patent Office is in no way liable for these particulars which are merely given for the purpose of information.

**26-01-2024**

| Patent document cited in search report | | Publication date | Patent family member(s) | | Publication date |
|---|---|---|---|---|---|
| US 2021073750 | A1 | 11-03-2021 | US | 2021073750 A1 | 11-03-2021 |
| | | | US | 2023368156 A1 | 16-11-2023 |
| US 2015339765 | A1 | 26-11-2015 | EP | 3146448 A1 | 29-03-2017 |
| | | | US | 2015339765 A1 | 26-11-2015 |
| | | | WO | 2015179636 A1 | 26-11-2015 |
| US 2007288347 | A1 | 13-12-2007 | AU | 2007233631 A1 | 11-10-2007 |
| | | | TW | 200805192 A | 16-01-2008 |
| | | | US | 2007288347 A1 | 13-12-2007 |
| | | | WO | 2007113316 A2 | 11-10-2007 |

EPO FORM P0459

For more details about this annex : see Official Journal of the European Patent Office, No. 12/82